# FASCICULE DE BREVET EUROPEEN

(11) **EP 3 970 260 B1**
(45) Date de publication et mention de la délivrance du brevet: **11.11.2026**
(21) Numéro de dépôt: 20737243.4
(22) Date de dépôt: 15.05.2020
(51) Int. Cl.: H02K 1/14, H02K 7/116, H02K 11/33, H02K 1/28, H02K 1/30, H02K 29/03

(54) **MOTOREDUCTEUR FAIBLE BRUIT A MOTEUR ELECTRIQUE DISSYMETRIQUE**
GERÄUSCHARMER GETRIEBEMOTOR MIT DISSYMETRISCHEM ELEKTROMOTOR
LOW NOISE GEAR MOTOR WITH DISSYMETRIC ELECTRIC MOTOR

(30) Priorité: 17.05.2019 FR 1905221
(43) Date de publication de la demande: 23.03.2022
(73) Titulaire: Moving Magnet Technologies, 25000 Besançon (FR)
(72) Inventeur: LAFORGE, Damien, 25320 CHEMAUDIN ET VAUX (FR); BILLET, Lionel, 25410 Dannemarie sur Crète (FR)
(74) Mandataire: IP Trust
(86) Numéro de dépôt international: PCT/FR2020/050816
(87) Numéro de publication internationale: WO 2020/234532

(56) Documents cités:
- EP-A1- 3 010 127
- EP-A1- 3 483 454
- WO-A1-2017/013266

## Description

### DOMAINE TECHNIQUE DE L'INVENTION

L'invention se rapporte au domaine des motoréducteurs, c'est-à-dire des dispositifs associant un moteur électrique à un train d'engrenages réducteur de vitesse ou de mouvement (multiplicateur de vitesse), et plus particulièrement à des motoréducteurs utilisant un moteur polyphasé sans balai à aimant permanent monté en surface et présentant une dissymétrie au niveau du stator du moteur.

### ETAT DE LA TECHNIQUE ANTERIEURE

Il est connu du document EP3483454 de la demanderesse, l'utilisation d'un stator comprenant une armature magnétique, trois bobines montées sur des branches de l'armature magnétique disposées de manière asymétrique autour du rotor, et notamment disposées dans un arc de cercle autour du rotor de moins de 180 degrés. Des pôles du stator du côté opposé des bobines sont formés par des dents de l'armature sans bobines, cela permettant d'avoir un stator de faible diamètre du côté opposé des bobines. Le rotor comporte 5 paires de pôles.

Par ailleurs, on connait le document WO2017013266 qui présente un moteur sans balai présentant au moins deux phases électriques, un rotor tournant autour d'un axe, et composé d'un ensemble statorique présentant au moins deux pôles portant chacun des bobines dont les axes de bobinage sont espacés d'un angle mécanique inférieur à 180°.

On connaît aussi la demande de brevet EP3010127 présentant un moteur dont le rotor comprend quatre paires de pôles S et un stator comprenant six pôles. Deux pôles statoriques bobinés sont décalés angulairement l'un par rapport à l'autre de 112,5°.

Ces dispositifs de l'art antérieur ont pour objet de résoudre le problème général de la minimisation du couple sans courant des moteurs afin d'éviter le bruit et l'usure des composants.

Cependant, lorsque l'on souhaite utiliser un motoréducteur compact et silencieux, si les choix proposés par les documents susvisés en termes de largeurs de dents au stator permettent bien de minimiser le couple résiduel (sans courant), le nombre de paires de pôles au rotor enseigné ne permet pas, en association avec un stator dissymétrique, de réaliser un entrainement silencieux.

En effet, il a été observé que l'utilisation d'un rotor à 5 paires de pôles en interaction magnétique avec un stator bobiné dissymétrique présentant des dents étroites et telle que présentée dans ces documents, peut se révéler défavorable en termes d'émission acoustique du fait des efforts transverses - on parle alors de forces radiales - s'exerçant entre le stator et le rotor lorsque les bobines sont activées. Particulièrement, il a été noté qu'une alimentation de type triphasée, que celle-ci soit sinusoïdale, par bloc ou multi-pas, dans le cas d'utilisation d'un rotor à 5 paires de pôles montés en surface, engendre des efforts transverses importants entre le stator et le rotor relativement à l'effort résiduel et favorise dans certains cas des vibrations par sollicitation de fréquences de résonance (modes propres) de la structure.

### EXPOSE DE L'INVENTION

La présente invention vise à pallier les inconvénients de l'état de la technique en réalisant un motoréducteur compact et silencieux. La présente invention vise plus particulièrement à combiner un train d'engrenages réducteur avec un stator et un rotor particuliers permettant de minimiser les émissions acoustiques en diminuant les efforts transverses entre stator et rotor tout en conservant un couple résiduel acceptable.

La présente invention a aussi pour objet de minimiser les variations de ces efforts transverses aux tolérances de positionnement du rotor par rapport au rotor.

Pour ce faire, il a été observé de manière surprenante que l'utilisation d'un rotor présentant 4 paires de pôles en interaction avec un stator dissymétrique triphasé, mène à des solutions d'entrainement plus silencieuses que celles de l'art antérieur et ce quel que soit le type d'alimentation du moteur. Lorsqu'associée à un réducteur mécanique à engrenages, la solution obtenue est alors compacte et silencieuse. Lors de l'excentration du rotor, la variation de ces efforts est même minimisée par rapport aux solutions de l'état de l'art.

Plus particulièrement, l'invention concerne un motoréducteur comportant un train d'engrenages réducteur et un moteur électrique triphasé comprenant un stator formé d'un empilement de tôles et d'un nombre de bobines électriques multiple de 3 et un rotor présentant k*N paires de pôles aimantés, avec k = 1 ou 2, le stator présentant deux secteurs angulaires alpha 1 et alpha 2 distincts, centrés sur le centre de rotation dudit moteur et comportant une alternance d'encoches et de 3*k*N dents régulièrement espacées convergeant vers le centre de rotation et définissant une cavité dans laquelle est placé ledit rotor, caractérisé en ce que N = 4 et en ce que alpha 1 est inférieur ou égal à 180° et comporte l'ensemble desdites bobines dudit moteur, le nombre de bobines étant inférieur ou égal à la moitié du nombre de dents. Cette configuration particulièrement permet d'obtenir les avantages visés plus haut. On entend par « régulièrement espacées » le fait que l'écart angulaire entre les dents depuis le centre de rotation est constant. Un « pôle aimanté » désigne un aimant permanent.

Dans un premier mode de réalisation lesdites dents sont constituées d'une alternance de dents larges et étroites, les dents larges présentant une largeur supérieure ou égale au double de la largeur des dents étroites, et la largeur d'encoche est supérieure à la largeur d'une dent étroite.

Dans un autre mode de réalisation, lesdites dents présentent toutes une largeur identique telle que ladite largeur est inférieure ou égale à la largeur d'encoche.

Dans un autre mode de réalisation, lesdites dents sont identiques et présentent des têtes de pôles évasées en direction dudit rotor telles que la largeur des têtes de pôles est supérieure à la largeur d'encoche.

Le rotor est préférentiellement porté par un support amagnétique, bien que l'utilisation d'une culasse magnétique puisse être envisagée. Ledit support amagnétique peut être en une matière injectée formant aussi un pignon pour l'entrainement dudit train d'engrenages. Un support amagnétique est préféré pour le rotor lorsque l'on considère une aimantation de type polaire, mais n'est pas requis si l'aimant est épais ou si l'on souhaite réaliser un pignon en acier fritté solidaire de ce support.

Dans une variante de réalisation, k=2 et le moteur comprend deux bobines par phase électrique. Cette réalisation permet notamment d'augmente le couple du motoréducteur à train d'engrenages donné.

Dans une variante, le train d'engrenages réducteur est formé par une vis sans fin entrainant une tige filetée.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
[Fig. 1a]
[Fig. 2a]

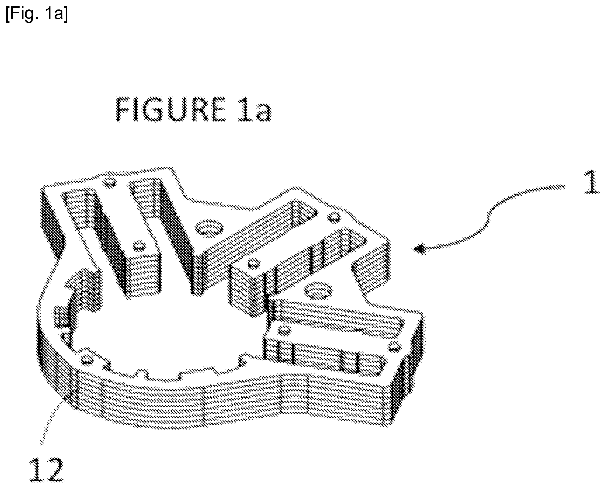

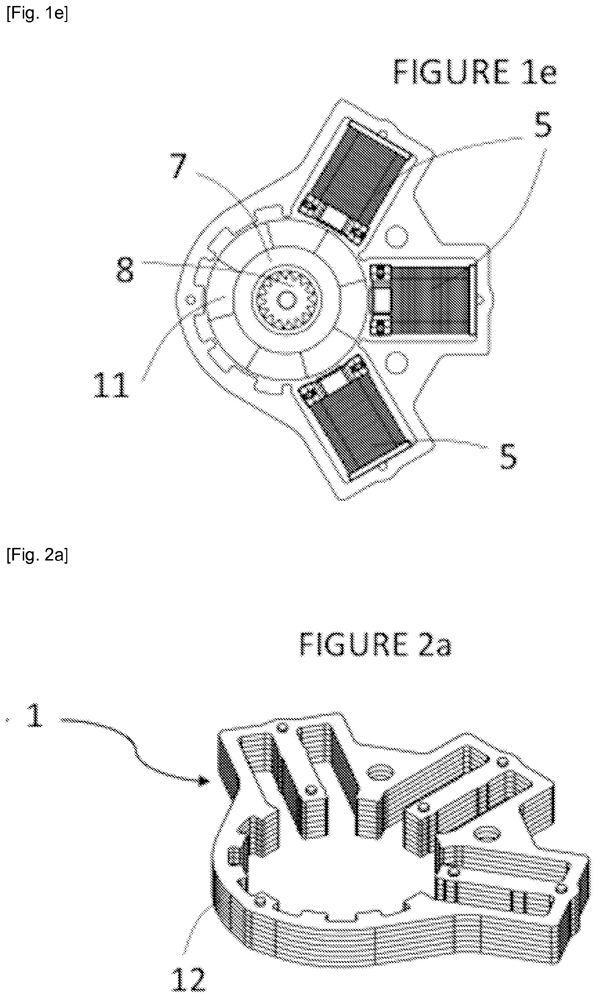

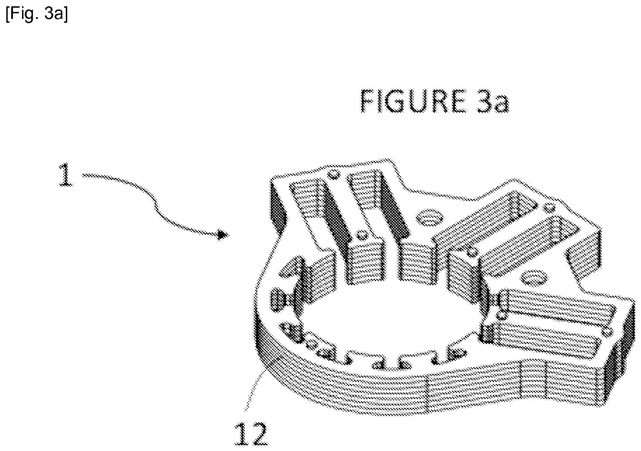

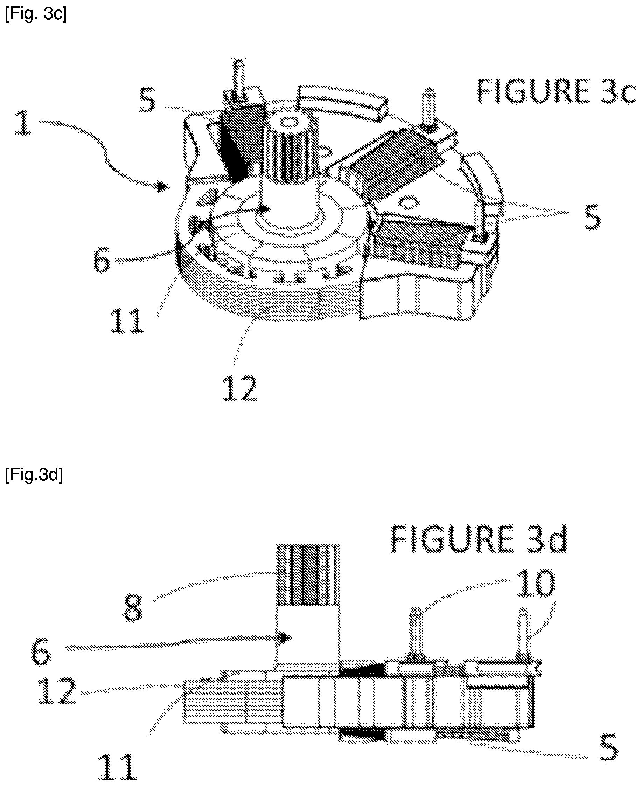

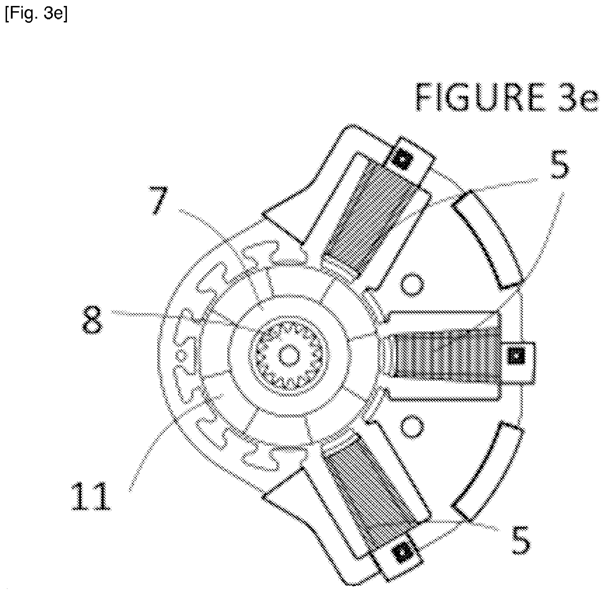

[Fig. 3a] les figures 1a, 2a et 3a, des vues en perspective isolées de différents stators d'un motoréducteur selon l'invention,
[Fig. 1b]
[Fig. 2b]

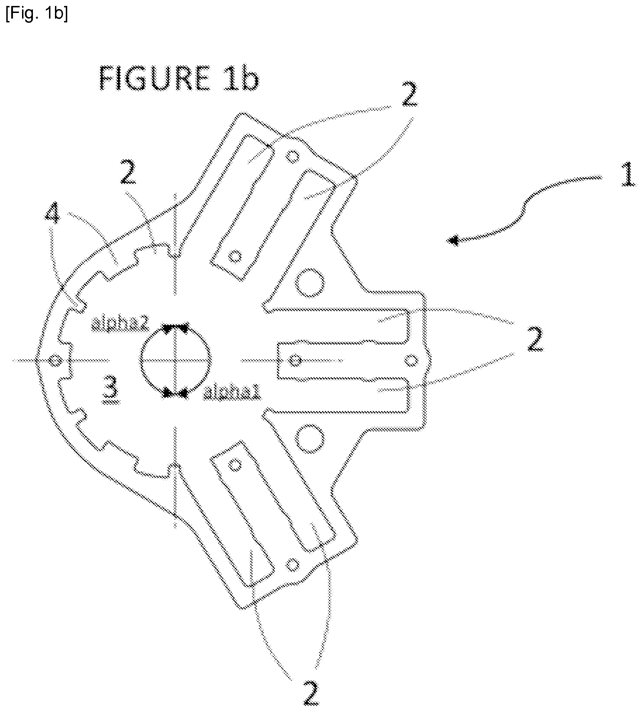

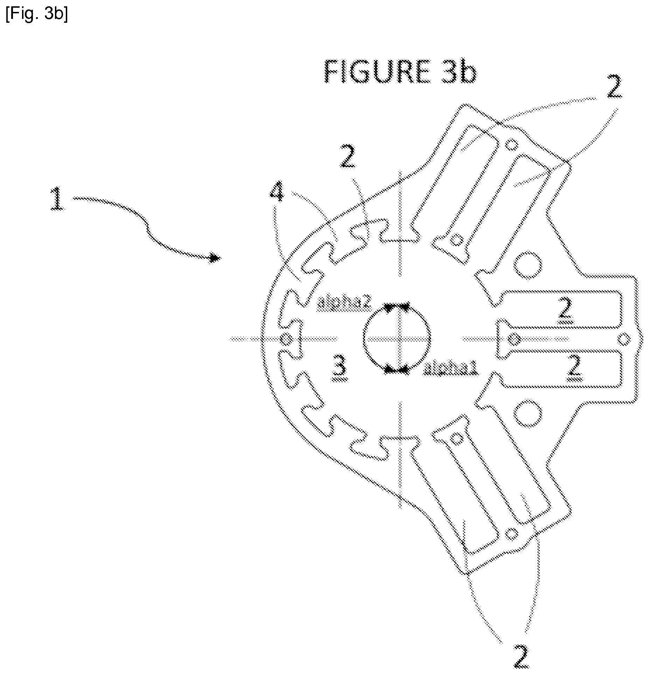

[Fig. 3b] les figures 1b, 2b et 3b, des vues de dessus des stators, respectivement, des figures 1a, 2a, 3a,
[Fig. 1c]
[Fig. 2c]
[Fig. 3c]les figures 1c, 2c et 3c, des vues en perspective de moteurs électriques utilisant les stators, respectivement, des figures 1a, 2a et 3a,
[Fig. 1d]
[Fig. 2d]
[Fig. 3d] les figures 1d, 2d et 3d, des vues de côtés des moteurs, respectivement, des figures 1c, 2c et 3c,
[Fig. 1e]
[Fig. 2e]
[Fig. 3e] les figures 1e, 2e et 3e, des vues de dessus des moteurs, respectivement, des figures 1c, 2c et 3c,
[Fig. 4] la figure 4, un graphique présentant l'évolution des efforts sur rotor,
[Fig. 5a]
[Fig. 5b]

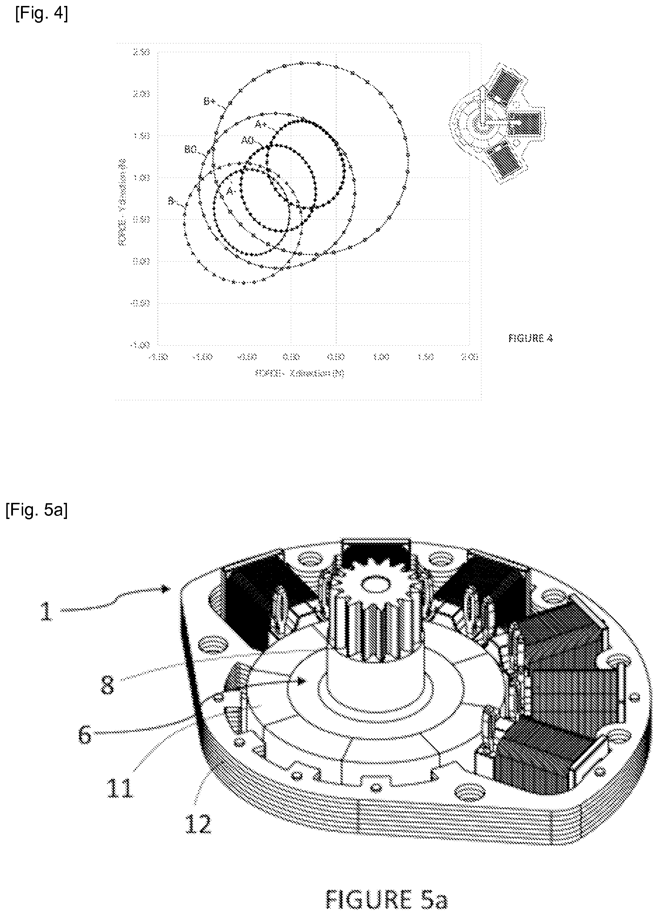

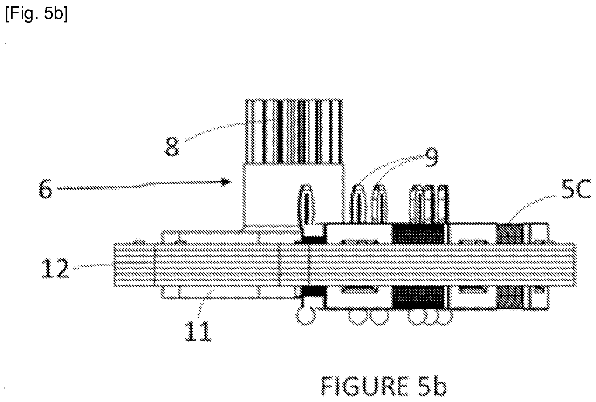

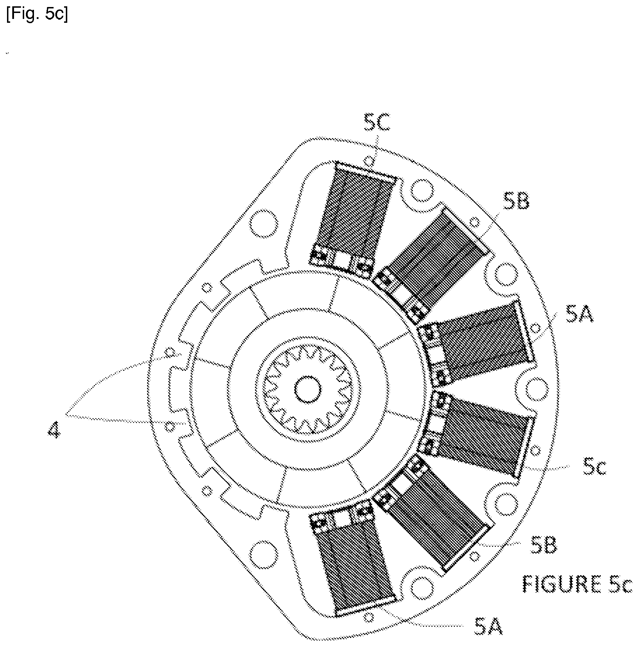

[Fig. 5c] les figures 5a, 5b et 5c, des vues, respectivement en perspective, de côté et de dessus, d'un autre mode de réalisation d'un moteur appartenant à un motoréducteur selon l'invention,
[Fig. 6a]

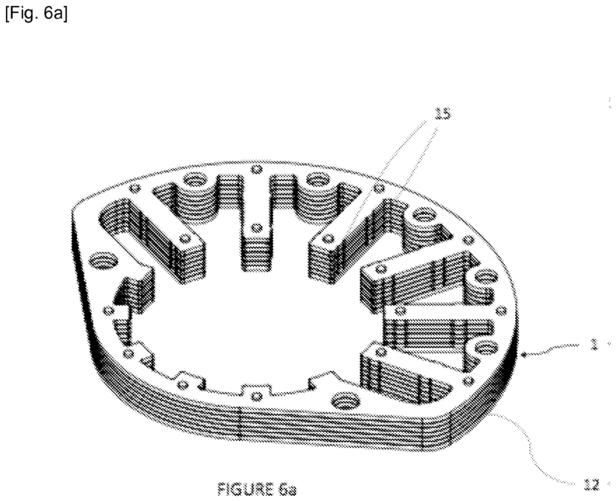

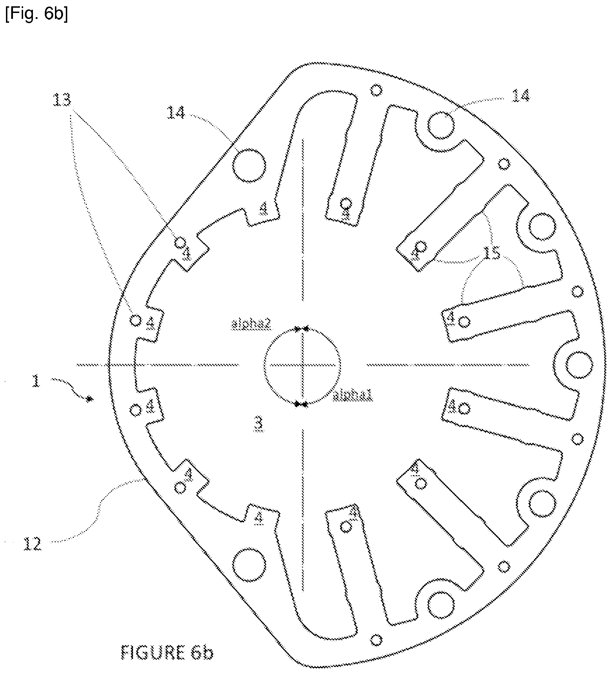

[Fig. 6b] les figures 6a et 6b, des vues isolées, respectivement en perspective et de dessus, du stator du mode de réalisation des figures 5a à 5c,
[Fig. 7a]
[Fig. 7b]

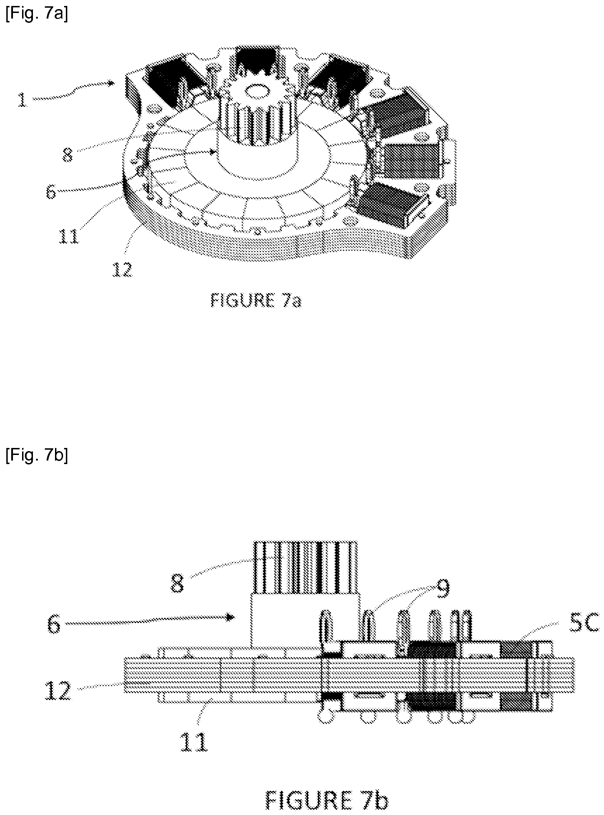

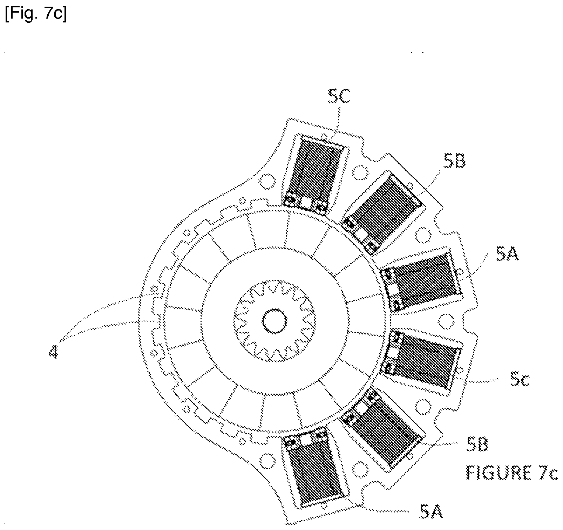

[Fig. 7c] les figures 7a, 7b et 7c, des vues, respectivement en perspective, de côté et de dessus, d'un autre mode de réalisation d'un moteur appartenant à un motoréducteur selon l'invention,
[Fig. 8a]

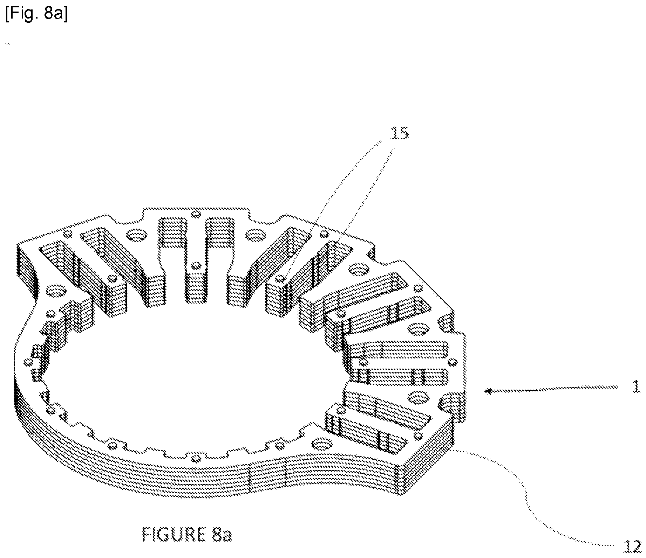

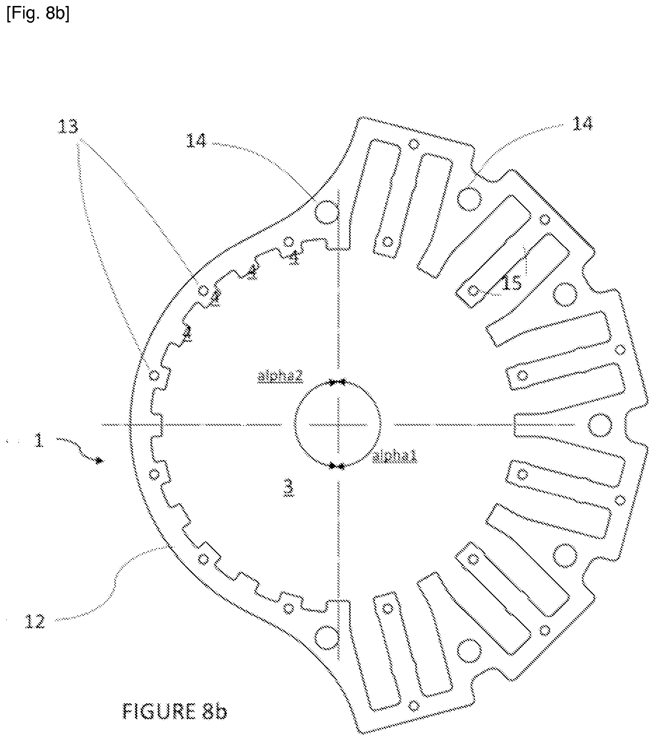

[Fig. 8b] les figures 8a et 8b, des vues isolées, respectivement en perspective et de dessus, du stator du mode de réalisation des figures 7a à 7c,
[Fig. 9a]

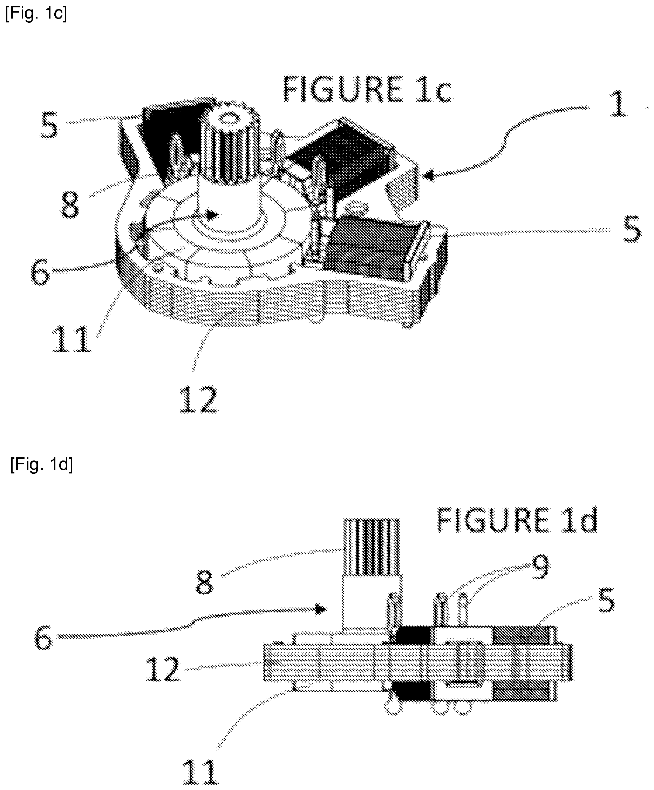

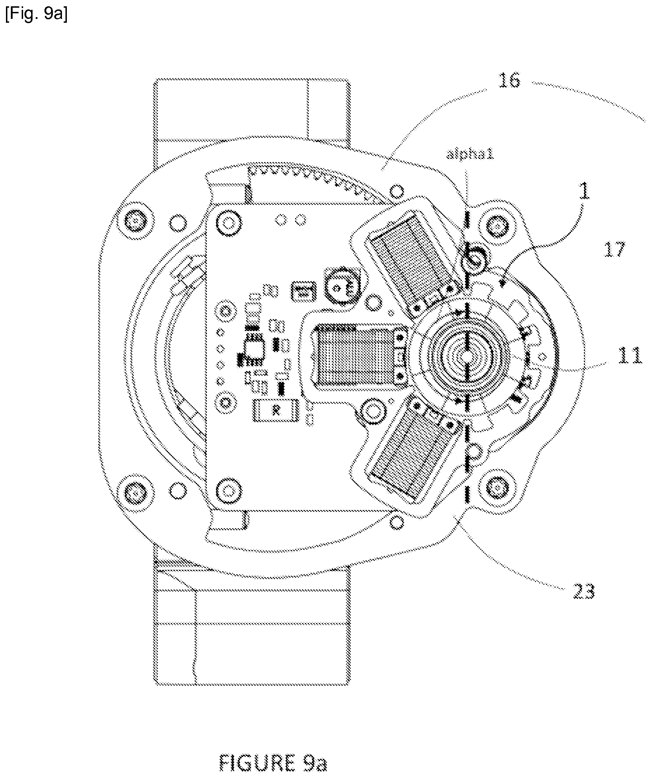

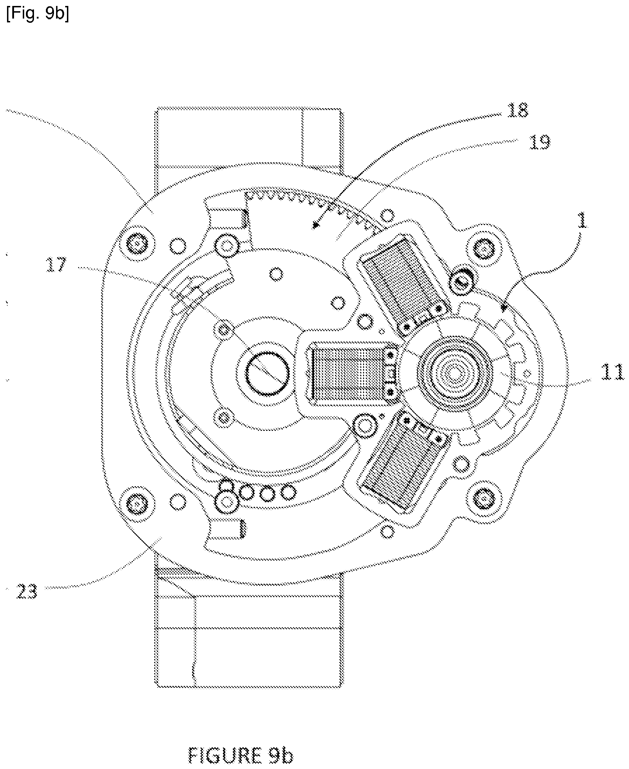

[Fig. 9b] les figures 9a et 9b, des vues de dessus et sans couvercle, d'un exemple de motoréducteur selon l'invention, utilisant un moteur tel que présentés en figures 1c à 1e,
[Fig. 9c]

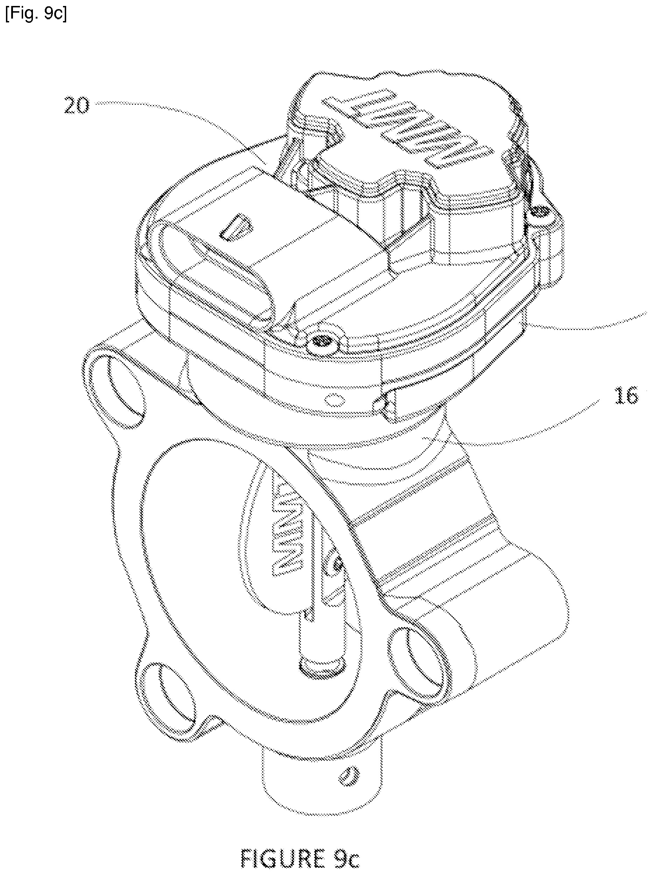

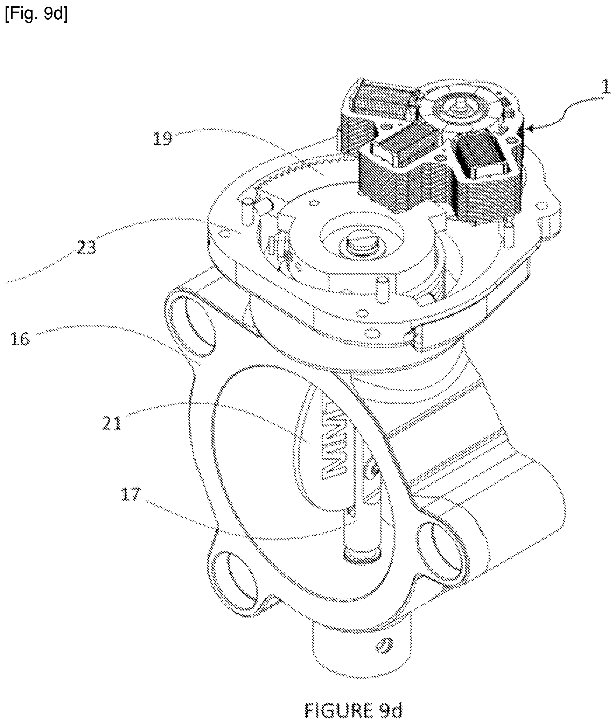

[Fig. 9d] les figures 9c et 9d, des vues en perspective respectivement avec et sans couvercle, du même exemple de motoréducteur des figures 9a et 9b,
[Fig. 10a]

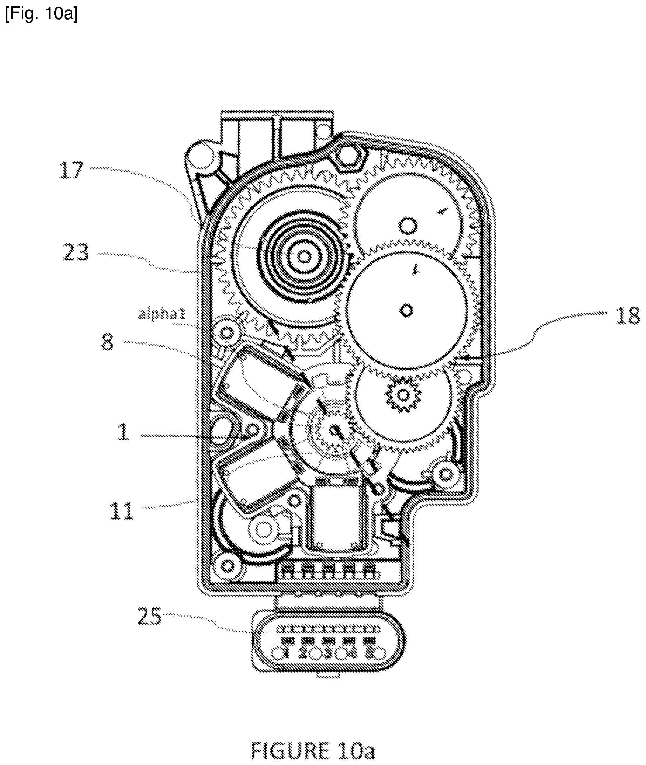

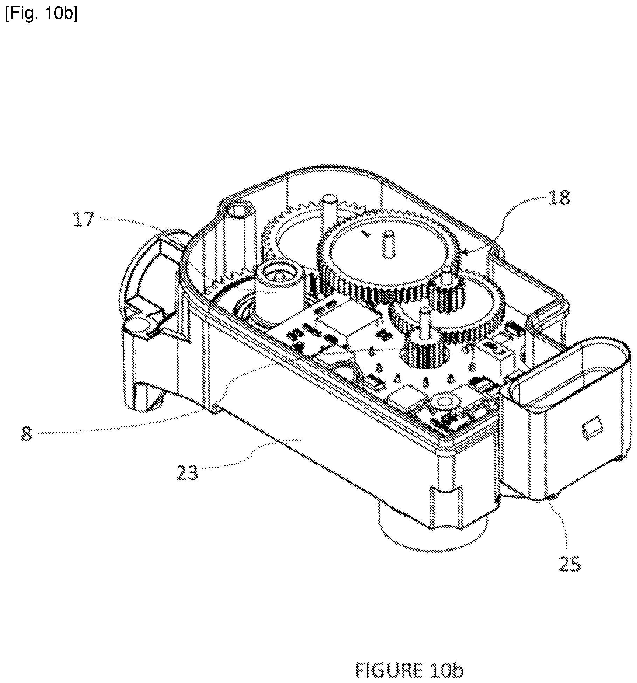

[Fig. 10b] les figures 10a et 10b, des vues respectivement de dessus et en perspective d'un deuxième exemple de motoréducteur selon l'invention,

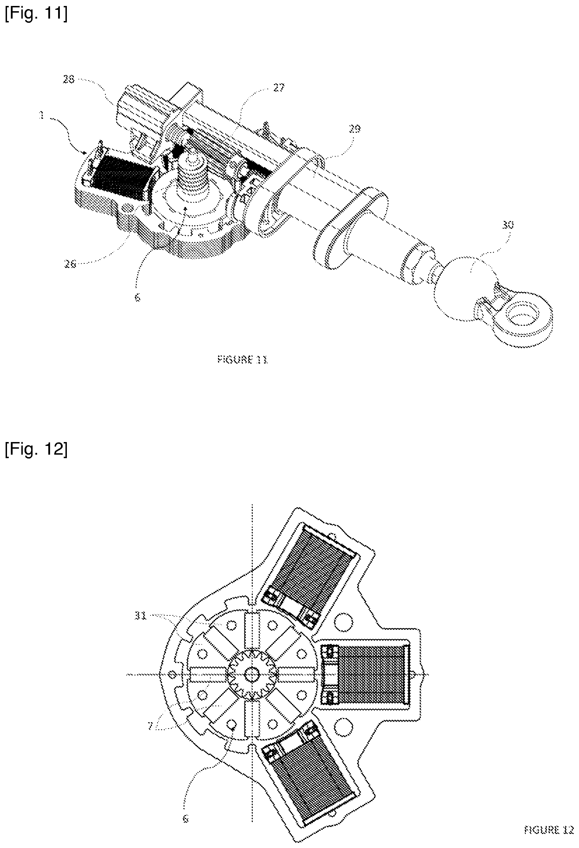

[Fig. 11] la figure 11, une vue en perspective d'un troisième exemple de motoréducteur selon l'invention,
[Fig. 12] la figure 12, une vue du dessus d'une alternative de réalisation du rotor d'un moteur appartenant à un motoréducteur selon l'invention.

### DESCRIPTION DETAILLEE D'UN MODE DE REALISATION

Les figures 1a et 1b représentent un premier exemple de stator à douze dents d'un moteur triphasé d'un motoréducteur selon l'invention. Ce stator (1) est formé par un empilement de tôles (12) formant un premier secteur angulaire (alpha 1) s'étendant sur 180° environ -à quelques degrés près et depuis le centre de rotation -, délimitant partiellement une cavité cylindrique (3) dont le diamètre est formé par une alternance d'encoches (2) et de dents (4), lesdites encoches (2) étant destinées à recevoir trois bobines électriques pour la création d'un champ de stator tournant et lesdites dents présentant en alternances des largeurs angulaires étroites et larges, ladite largeur angulaire « large » étant supérieure au double de la largeur angulaire « étroite ». La largeur angulaire est considérée depuis le centre de rotation du moteur et en tangence avec l'extrémité des dents (4).

Un deuxième secteur s'étendant sur l'arc (alpha 2) de 180° restant, délimitant partiellement ladite cavité cylindrique (3) dont le diamètre est aussi formé par une alternance d'encoches (2) et de dents (4), lesdites encoches (2) ne recevant aucunes bobines électriques et lesdites dents présentant en alternance des largeurs angulaires étroites et larges, ladite largeur angulaire « large » étant supérieure au double de la largeur angulaire « étroite ». La largeur angulaire est considérée depuis le centre de rotation du moteur et en tangence avec l'extrémité des dents (4).

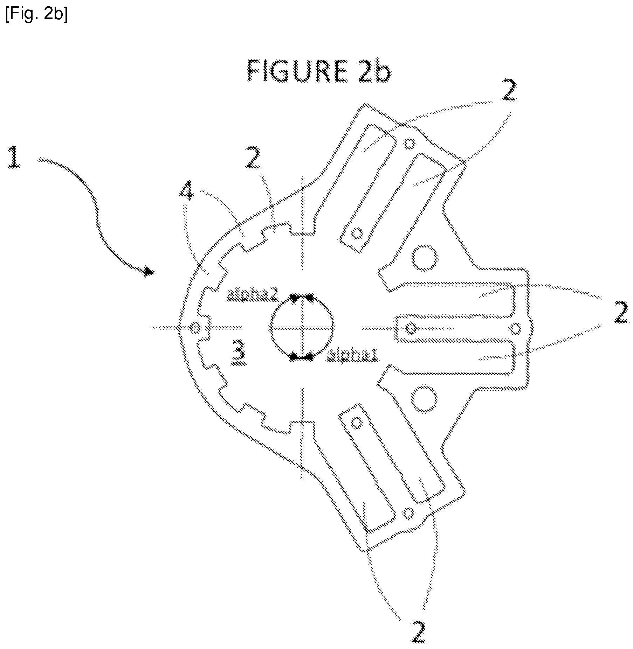

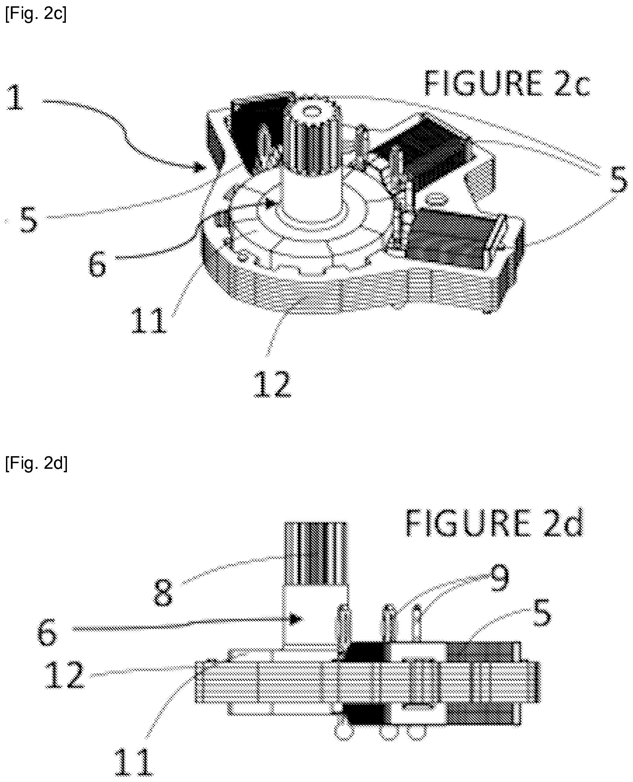

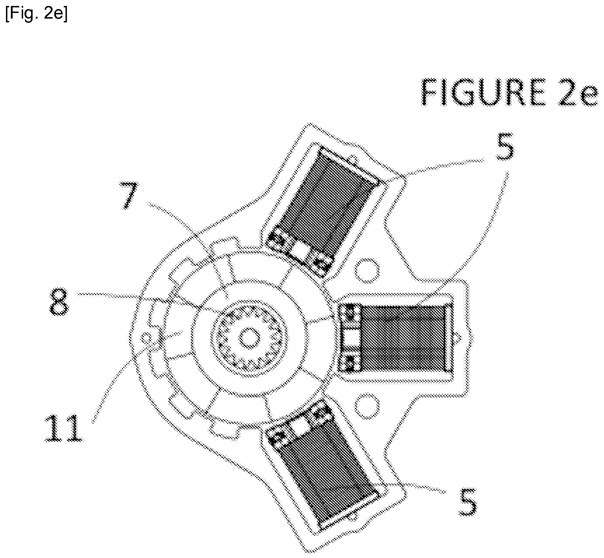

Les figures 2a et 2b représentent un deuxième exemple de stator à douze dents d'un moteur triphasé d'un motoréducteur selon l'invention. Ce stator (1) est formé par un empilement de tôles (12) formant un premier secteur angulaire (alpha 1) s'étendant sur 180° environ -à quelques degrés près et depuis le centre de rotation -, délimitant partiellement une cavité cylindrique (3) dont le diamètre est formé par une alternance d'encoches (2) et de dents (4), lesdites encoches (2) étant destinées à recevoir trois bobines électriques pour la création d'un champ de stator tournant et lesdites dents présentant des largeurs angulaires constantes, ladite largeur angulaire étant au maximum égale à la largeur angulaire des encoches. La largeur angulaire est considérée depuis le centre de rotation du moteur et en tangence avec l'extrémité des dents (4).

Un deuxième secteur s'étendant sur l'arc (alpha 2) de 180° restant, délimitant partiellement ladite cavité cylindrique (3) dont le diamètre est aussi formé par une alternance d'encoches (2) et de dents (4), lesdites encoches (2) ne recevant aucunes bobines électriques et lesdites dents présentant des largeurs angulaires constantes, ladite largeur angulaire étant au maximum égale à la largeur angulaire des encoches. La largeur angulaire est considérée depuis le centre de rotation du moteur et en tangence avec l'extrémité des dents (4).

Un stator suivant les figures 1a, 1b ou 2a, 2b permet notamment de glisser les bobines électriques (5) sur le stator après réalisation de ces dernières.

Les figures 3a et 3b représentent un troisième exemple de stator à douze dents d'un moteur triphasé d'un motoréducteur selon l'invention. Ce stator (1) est formé par un empilement de tôles (12) formant un premier secteur angulaire (alpha 1) s'étendant sur 180° environ -à quelques degrés près et depuis le centre de rotation -, délimitant partiellement une cavité cylindrique (3) dont le diamètre est formé par une alternance d'encoches (2) et de dents (4), lesdites encoches (2) étant destinées à recevoir trois bobines électriques pour la création d'un champ de stator tournant et lesdites dents présentant des largeurs angulaires constantes, lesdites largeurs angulaires étant formées par des têtes de pôles élargies vers la cavité (3) et étant au minimum égales à la largeur angulaire des encoches. La largeur angulaire est considérée depuis le centre de rotation du moteur et en tangence avec l'extrémité des dents (4).

Un deuxième secteur s'étendant sur l'arc (alpha 2) de 180° restant, délimitant partiellement ladite cavité cylindrique (3) dont le diamètre est aussi formé par une alternance d'encoches (2) et de dents (4), lesdites encoches (2) ne recevant aucunes bobines électriques et lesdites dents présentant des largeurs angulaires constantes, ladite largeur angulaire étant formée par des têtes de pôles élargies vers la cavité (3) et étant au minimum égale à la largeur angulaire des encoches. La largeur angulaire est considérée depuis le centre de rotation du moteur et en tangence avec l'extrémité des dents (4).

Pour cette dernière réalisation des figures 3a et 3b, les bobines (5) devront être réalisées -bobinées- directement sur les dents (4).

Les différentes figures 1c à 1e, 2c à 2e et 3c à 3e représentent les moteurs complets associés aux stators décrits ci-dessus avec les différentes bobines (5) placées sur les dents (4) au niveau des encoches (2) ainsi que les rotors (6) placés à l'intérieur desdites cavités (3). La largeur des bobines (5) dépend de la largeur des encoches (2) en fonction des largeurs des extrémités des dents (4). Les rotors (6) comprennent un aimant (11) multipolaire présentant quatre alternances de pôles Nord et Sud (on parle de quatre paires de pôles, soit quatre alternances Nord-Sud), chaque pôle pouvant présenter une aimantation radiale sortante/rentrante ou une aimantation unidirectionnelle rentrante/sortante ou une aimantation de type polaire ou toute aimantation connue réalisant une alternance de pôles aimantés. Ces aimants sont ici portés par un support (7) amagnétique, typiquement en matière plastique injectée, portant un pignon (8) destiné à entrainer un train d'engrenages réducteur. Le pignon (8) est préférentiellement, mais non limitativement, réalisé dans la même matière que celle du support (7) et préférentiellement en même temps lors de l'injection.

Comme illustré en figures 1d, 2d et 3d, le rotor est préférentiellement d'une hauteur axiale plus importante que celle des tôles (12) du stator (1) afin de maximiser le flux magnétique produit par les aimants et collecté par les bobines (5) sans pénaliser la hauteur axiale totale du moteur. Les connexions de bobines (5) se font à un circuit imprimé (non montré) grâce soit à des contacts de type press-fit (9), soit à des cosses (10) à souder ou à insérer dans des contacts adaptés.

La figure 4 présente un graphique montrant les performances typiques obtenues par un motoréducteur selon l'invention, selon l'indice (A), en comparaison avec un motoréducteur présentant un moteur à 5 paires de pôles, selon l'indice (B), en termes de forces radiales s'exerçant sur le rotor lorsque les bobines sont alimentées avec un courant variable (ici selon un pilotage de type sinusoïdal d'amplitude 200 ampères-tours par bobine) et lorsque le rotor est centré, indice (0), excentré de +0.035 mm suivant la direction X et suivant la direction Y, avec indice (+), soit 0.05mm d'excentration totale, ou excentré de -0.035 mm suivant ces mêmes directions, indice (-).

Pour un motoréducteur de l'art antérieur à rotor centré, indice (B0), lors de la rotation du rotor, l'amplitude des efforts radiaux décrit un cercle, variant de -1 N à +0.75 N suivant X et de -0.25 N à 1.75 N environ suivant Y. Dans les mêmes dimensions et mêmes conditions d'utilisation, un motoréducteur selon l'invention, indice (A0), l'amplitude des efforts radiaux décrit une ellipse, variant de -0.5 N à +0.25 N suivant X et de 0.4 N à 1.4 N environ suivant Y, soit une diminution sensible de l'oscillation de la force radiale.

Lors de l'excentration du rotor, ces variations sont encore plus réduites pour un motoréducteur selon l'invention en comparaison avec l'art antérieur, comme le montre la figure 4, démontrant la plus grande robustesse de cette solution. En effet, avec une excentration de +0.035 mm, indice (B+), le moteur suivant l'art antérieur connait la plus grande variation de force, avec une amplitude des efforts radiaux décrivant un cercle, variant de -0.9 N à +1.35 N suivant X et de 0.0 N à 2.4 N environ suivant Y. Le moteur selon la présente invention dans les mêmes conditions, indice (A+), présente deux fois moins de variation de force.

Les figures 5a, 5b et 5c montrent une variante de réalisation d'un moteur utilisé dans un motoréducteur selon l'invention qui présente deux bobines par phase pour un total de six bobines (5A, 5B, 5C), toujours avec un stator (1) présentant douze dents (4), ici d'égale largeur et un rotor présentant quatre paires de pôles. Les indices A, B et C font référence à chaque phase. Ces dernières sont espacées de 30° mécanique les unes des autres soit 30°*4=120° électrique. Deux bobines appartenant à une phase sont espacées de 90° mécanique soit donc 90°*4=360°=0° électrique.

Les figures 6a et 6b sont deux vues isolées de stator (1) de la variante de moteur montré en figures 5a, 5b et 5c. Elles permettent d'apprécier les secteurs angulaires alpha 1, sur lequel sont montées les bobines électriques dans les encoches (2), et alpha 2 sur lequel aucune bobine n'est montée. Dans cet exemple, les douze dents (4) sont toutes identiques, sont droites et de largeur angulaire au maximum égale à la largeur d'encoche. Des largeurs de dents telles que montrées et décrites en référence aux figures 1b et 3b sont aussi possibles. Les différentes marques (13) rondes sont relatives à l'agrafage de l'empilement des tôles (12). Les différents perçages (14) servent à positionner et fixer le moteur dans le motoréducteur ou dans l'application dans laquelle est utilisé le moteur. Les renflements (15) présents sur les côtés des dents (4) servent à tenir et contraindre les bobines lors et après leur insertion sur lesdites dents (4). Ces renflements (15) sont réalisés directement sur l'empilement de tôles lors de leur réalisation, par étampage par exemple.

Les figures 7a, 7b et 7c montrent une autre variante de réalisation d'un moteur utilisé dans un motoréducteur selon l'invention qui présente deux bobines par phase pour un total de six bobines (5A, 5B, 5C), avec un stator (1) présentant vingt-quatre dents (4), ici d'égale largeur et un rotor présentant huit paires de pôles. Les indices A, B et C font référence à chaque phase. Elles sont espacées de 15° mécanique les unes des autres soit 15*8=120° électrique. Deux bobines appartenant à une phase sont espacées de 90° mécanique soit donc 90*8=720°=0° électrique.

Les figures 8a et 8b sont deux vues isolées de stator (1) de la variante de moteur montré en figures 7a, 7b et 7c. Elles permettent d'apprécier les secteurs angulaires alpha 1, sur lequel sont montées les bobines électriques dans les encoches (2), et alpha 2 sur lequel aucune bobine n'est montée. Dans cet exemple, les vingt-quatre dents (4) sont toutes identiques, sont droites et de largeur angulaire au maximum égale à la largeur d'encoche. Des largeurs de dents telles que montrées et décrites en référence aux figures 1b et 3b sont aussi possibles. Les différentes marques (13) rondes sont relatives à l'agrafage de l'empilement des tôles (12). Les différents perçages (14) servent à positionner et fixer le moteur dans le motoréducteur ou dans l'application dans laquelle est utilisé le moteur. Les renflements (15) présents sur les côtés des dents (4) servent à tenir et contraindre les bobines lors et après leur insertion sur lesdites dents (4). Ces renflements (15) sont réalisés directement sur l'empilement de tôles lors de leur réalisation, par étampage par exemple.

Les figures 9a à 9d montrent un premier exemple de réalisation d'un motoréducteur selon l'invention. Le moteur utilisé est identique à celui présenté en figures 1c à 1e. Ce dernier est installé sur un corps de vanne (16), le secteur alpha 1 étant tourné du côté de l'arbre de rotation (17) de la vanne afin de placer le moteur au plus près du bord du corps de vanne (16) et augmenter ainsi l'entraxe aimant (11)/ arbre de rotation (17) et ainsi le bras de levier sur l'étage de réduction du train d'engrenages (18) formé ici par la roue dentée (19). Cette roue dentée (19) est solidaire de l'arbre (17) portant un clapet (21) obturant un conduit (22). Le boitier (23) du motoréducteur est ici partie intégrante du corps de vanne (16) mais peut être un élément distinct de celui-ci en fonction des besoins. Le motoréducteur est fermé par un couvercle (20) vissé sur le boitier (23). Ce motoréducteur est typiquement utilisé pour le dosage de fluide dans une automobile.

Les figures 10a et 10b montrent un deuxième exemple de réalisation d'un motoréducteur selon l'invention. Le moteur utilisé est identique à celui présenté en figures 1c à 1e. Ce dernier est installé dans un boitier (23) contenant un train d'engrenages (18) constitué par quatre roues intermédiaires formant autant d'étages de réduction déplaçant l'arbre de sortie (17). Le secteur alpha 1 est placé du côté des parois du boitier (23) afin de libérer l'espace pour le placement du train d'engrenages (18), dans l'optique de réaliser un motoréducteur compact axialement. Le boitier (23) est destiné à être fermé par un couvercle (non montré), pour réaliser un module d'actionnement à installer dans l'application visée. Le motoréducteur comprend ici un circuit imprimé (24) sur lequel vient se connecter les bobines du moteur par les éléments press-fit (9) décrits en figure 1d. Ce circuit imprimé (24) comprend notamment les éléments électroniques nécessaire au pilotage du moteur électrique. Le boitier (23) comprend aussi un connecteur (25) pour relier le boitier (23) à une alimentation électrique extérieure permettant aussi la communication d'informations telles que la position, le diagnostic d'utilisation,...

La figure 11 montre un troisième exemple de réalisation d'un motoréducteur selon l'invention. Le moteur utilisé est identique à celui présenté en figures 1c à 1e. Ce dernier est associé à un train d'engrenages (18) constitué par une vis sans fin (26), solidaire du rotor (6), associée à une tige filetée (27). Cette dernière est guidée par un écrou fixe (28) et entraine un écrou mobile (29) solidaire d'un organe de commande (30). Le secteur alpha 1 est placé en partie dessous, axialement, de la tige filetée (27). L'ensemble motoréducteur réalisé est alors destiné à être intégré dans un boitier (non montré) pour être monté dans l'application.

Sur la figure 12, une alternative de réalisation d'un rotor (6) est montrée, associé à un stator semblable à celui de la figure 1a. Ce rotor présente des aimants (7) enterrés dans une culasse ferromagnétique douce (31). Cette réalisation permet, dans certains cas, d'augmenter le flux du rotor et de aussi de diminuer les coûts de réalisation. Ce rotor est dimensionné suivant les enseignements de l'état de l'art en la matière.

## Revendications

1. Motoréducteur comportant un train d'engrenages réducteur (18) et un moteur électrique triphasé comprenant un stator (1) formé d'un empilement de tôles (12) et d'un nombre de bobines électriques (5, 5A, 5B, 5C) multiple de 3 et un rotor (6) présentant k*N paires de pôles aimantés (11), avec k = 1 ou 2, le stator (1) présentant deux secteurs angulaires (alpha 1) et (alpha 2) distincts, centrés sur le centre de rotation dudit moteur et comportant une alternance d'encoches (2) et de 3*k*N dents (4) régulièrement espacées convergeant vers le centre de rotation et définissant une cavité (3) dans laquelle est placé ledit rotor (6), alpha 1 inférieur ou égal à 180° et comportant l'ensemble desdites bobines (5, 5A, 5B, 5C) dudit moteur, le nombre de bobines étant inférieur ou égal à la moitié du nombre de dents **caractérisé en ce que** N = 4.

2. Motoréducteur selon la revendication 1 **caractérisé en ce que** lesdites dents (4) sont constituées d'une alternance de dents larges et étroites, les dents larges présentant une largeur supérieure ou égale au double de la largeur des dents étroites, et **en ce que** la largeur d'encoche est supérieure à la largeur d'une dent étroite.

3. Motoréducteur selon la revendication 1 **caractérisé en ce que** lesdites dents (4) présentent toutes une largeur identique telle que ladite largeur est inférieure ou égale à la largeur d'encoche.

4. Motoréducteur selon la revendication 1 **caractérisé en ce que** lesdites dents (4) sont identiques et présentent des têtes de pôles évasées en direction dudit rotor (6) telles que la largeur des têtes de pôles est supérieure à la largeur d'encoche.

5. Motoréducteur selon l'une quelconque des revendications précédentes **caractérisé en ce que** le rotor (6) est porté par un support (7) amagnétique.

6. Motoréducteur selon la revendication précédente **caractérisé en ce que** ledit support (7) amagnétique est en matière injectée formant aussi un pignon (8) pour l'entrainement dudit train d'engrenages.

7. Motoréducteur selon l'une quelconque des revendications précédentes **caractérisé en ce que** k=2 et **en ce qu'**il comprend deux bobines (5A, 5B, 5C) par phase électrique.

8. Motoréducteur selon l'une quelconque des revendications précédentes **caractérisé en ce que** le train d'engrenages (18) réducteur est formé par une vis sans fin (26) entrainant une tige filetée (27).

## Patentansprüche

1. Getriebemotor mit einem Untersetzungsgetriebe (18) und einem dreiphasigen Elektromotor, umfassend einen Stator (1), der aus einem Blechpaket (12) und einer Anzahl von elektrischen Spulen (5, 5A, 5B, 5C), die ein Vielfaches von 3 ist, ausgebildet ist, und einen Rotor (6), der k*N magnetische Polpaare (11) aufweist, wobei k = 1 oder 2, wobei der Stator (1) zwei verschiedene Winkelsektoren (alpha 1) und (alpha 2) aufweist, die auf den Drehmittelpunkt des Motors zentriert sind und abwechselnd Kerben (2) und 3*k*N regelmäßig beabstandete Zähne (4) vorweisen, die zu dem Drehmittelpunkt hin konvergieren und einen Hohlraum (3) definieren, in dem der Rotor (6) platziert ist, wobei alpha 1 kleiner als oder gleich 180° ist und den Satz der Spulen (5, 5A, 5B, 5C) des Motors vorweist, wobei die Anzahl der Spulen kleiner als oder gleich der Hälfte der Anzahl von Zähnen ist, **dadurch gekennzeichnet, dass** N = 4.

2. Getriebemotor nach Anspruch 1, **dadurch gekennzeichnet, dass** die Zähne (4) aus abwechselnd breiten und schmalen Zähnen gebildet sind, wobei die breiten Zähne eine Breite aufweisen, die größer als oder gleich dem Doppelten der Breite der schmalen Zähne ist, und dass die Breite der Kerbe größer als die Breite eines schmalen Zahns ist.

3. Getriebemotor nach Anspruch 1, **dadurch gekennzeichnet, dass** die genannten Zähne (4) alle eine identische Breite aufweisen, derart, dass die Breite kleiner als oder gleich der Breite der Kerbe ist.

4. Getriebemotor nach Anspruch 1, **dadurch gekennzeichnet, dass** die Zähne (4) identisch sind und ausgeweitete Polköpfe in Richtung des Rotors (6) aufweisen, derart, dass die Breite der Polköpfe größer als die Breite der Kerbe ist.

5. Getriebemotor nach einem der vorstehenden Ansprüche, **dadurch gekennzeichnet, dass** der Rotor (6) von einem unmagnetischen Träger (7) getragen wird.

6. Getriebemotor nach dem vorstehenden Anspruch, **dadurch gekennzeichnet, dass** der unmagnetische Träger (7) aus Spritzgussmaterial ist, das auch ein Ritzel (8) für den Antrieb des Getriebezuges ausbildet.

7. Getriebemotor nach einem der vorstehenden Ansprüche, **dadurch gekennzeichnet, dass** k=2 ist und dadruch, dass er zwei Spulen (5A, 5B, 5C) pro elektrischer Phase umfasst.

8. Getriebemotor nach einem der vorstehenden Ansprüche, **dadurch gekennzeichnet, dass** das Untersetzungsgetriebe (18) durch eine Schnecke (26) ausgebildet ist, die eine Gewindestange (27) antreibt.

## Claims

1. Gear motor comprising a reduction gear train (18) and a three-phase electric motor comprising a stator (1) formed by a stack of sheets (12) and by a number of electric coils (5, 5A, 5B, 5C) that is a multiple of 3 and a rotor (6) having k*N pairs of magnetized poles (11), where k = 1 or 2, the stator (1) having two separate angular sectors (alpha 1) and (alpha 2) which are centered on the center of rotation of said motor and comprising an alternation of notches (2) and of 3*k*N teeth (4) which are regularly spaced and converge toward the center of rotation and define a cavity (3) in which said rotor (6) is arranged, alpha 1 being less than or equal to 180°, and comprising all of said coils (5, 5A, 5B, 5C) of said motor, the number of coils being less than or equal to half the number of teeth, **characterized in that** N = 4.

2. Gear motor according to claim 1, **characterized in that** said teeth (4) consist of an alternation of wide and narrow teeth, the wide teeth having a width greater than or equal to twice the width of the narrow teeth, and **in that** the notch width is greater than the width of a narrow tooth.

3. Gear motor according to claim 1, **characterized in that** said teeth (4) all have an identical width such that said width is less than or equal to the notch width.

4. Gear motor according to claim 1, **characterized in that** said teeth (4) are identical and have pole heads flared toward said rotor (6) such that the width of the pole heads is greater than the notch width.

5. Gear motor according to any of the preceding claims, **characterized in that** the rotor (6) is supported by a non-magnetic support (7).

6. Gear motor according to the preceding claim, **characterized in that** said non-magnetic support (7) is made from an injected material also forming a pinion (8) for driving said gear train.

7. Gear motor according to any of the preceding claims,
**characterized in that** k=2 and **in that** the gear motor comprises two coils (5A, 5B, 5C) per electrical phase.

8. Gear motor according to any of the preceding claims, **characterized in that** the reduction gear train (18) is formed by a worm (26) driving a threaded rod (27).
